# EUROPÄISCHE PATENTANMELDUNG

(11) **EP 2 570 958 A1**
(43) Veröffentlichungstag der Anmeldung: **20.03.2013**
(21) Anmeldenummer: 12184556.4
(22) Anmeldetag: 14.09.2012
(51) Int. Cl.: G06F 21/31, G07C 9/00

(54) **Authentifizierungseinrichtung und Authentifizierungsverfahren**

(30) Priorität: 15.09.2011 DE 102011113501
(71) Anmelder: embedded projects GmbH, 86152 Augsburg (DE)
(72) Erfinder: Sauter, Benedikt, 86152 Augsburg (DE)
(74) Vertreter: Epping - Hermann - Fischer

(57) **Zusammenfassung**

Eine Authentifizierungseinrichtung (100) umfasst einen Bewegungssensor (10), der eingerichtet ist, eine Bewegung im dreidimensionalen Raum zu detektieren, um ein Bewegungssignal zu erzeugen, eine Anzeigeeinheit (30) und eine Auswerteeinheit (20). Die Auswerteeinheit (20) ist eingerichtet, auf der Basis des Bewegungssignals (MS) jeweilige diskrete Bewegungswerte zu bestimmen und in einem Bewegungsvektor zu speichern, die Anzeigeeinheit (30) anzusteuern, um nach jeder Bestimmung eines jeweiligen Bewegungswerts eine diesem Bewegungswert zugeordnete Anzeige zu erzeugen, und ein Authentifizierungssignal (AUT) auf der Basis eines Vergleichs des Bewegungsvektors mit einem vorgegebenen Authentifizierungsvektor auszugeben.

## Beschreibung

Die Erfindung betrifft eine Authentifizierungseinrichtung zur Authentifizierung eines Benutzers sowie ein entsprechendes Authentifizierungsverfahren.

In vielen Anwendungen des täglichen Lebens ist es erforderlich, dass die Berechtigung eines Benutzers zur Durchführung einer bestimmten Tätigkeit überprüft wird und insbesondere nur bei erfolgreicher Authentifizierung erlaubt wird. Dabei kann die Authentifizierung zu dem Zweck erfolgen, Zugang zu einem abgesperrten Bereich, beispielsweise durch eine Tür, zu ermöglichen. Weiterhin kann auch die Nutzung eines Geräts, insbesondere eines elektronischen Geräts, von einer erfolgreichen Authentifizierung abhängig gemacht werden. Dies ist beispielsweise von einer PIN-Eingabe bei einem Mobiltelefon bekannt. In ähnlicher Weise sind Codeschlösser bekannt, die erst nach Eingabe einer Zahlenkombination auf einer Tastatur geöffnet werden.

Dabei ist es jedoch jeweils erforderlich, dem Benutzer eine Tastatur zur Verfügung zu stellen, um die Eingabe eines Codes zu ermöglichen.

Weitere Authentifizierungsmethoden basieren beispielsweise auf biometrischen Daten eines Benutzers wie eine Netzhautanalyse oder der Identifikation eines Fingerabdrucks. Solche Verfahren sind jedoch aufwändig zu implementieren.

Eine zu lösende Aufgabe besteht darin, ein verbessertes Konzept für die Authentifizierung eines Benutzers anzugeben, welche sich mit geringem Aufwand realisieren lässt.

Diese Aufgabe wird mit dem Gegenstand der unabhängigen Patentansprüche gelöst. Weiterbildungen und Ausgestaltungen sind Gegenstand der abhängigen Ansprüche.

Beispielsweise wird eine Authentifizierungseinrichtung mit einem Bewegungssensor vorgesehen, der eingerichtet ist, eine Bewegung im dreidimensionalen Raum zu detektieren, um ein Bewegungssignal zu erzeugen. Die Authentifizierungseinrichtung ist ferner mit einer Anzeigeeinheit und mit einer Auswerteeinheit versehen. Mit dem Bewegungssensor beziehungsweise dem resultierenden Bewegungssignal kann ein Bewegungsmuster der Authentifizierungseinrichtung beziehungsweise des Bewegungssensors aufgezeichnet werden, um dieses Bewegungsmuster mit einer oder mehreren gespeicherten Authentifizierungsmustern zu vergleichen. Das Bewegungsmuster wird hierbei während der Aufzeichnung vorzugsweise über die Anzeigeeinheit visualisiert, um dem Benutzer der Authentifizierungseinrichtung eine Rückmeldung über die vorgenommenen Bewegungen zu geben. Anhand eines abschließenden Vergleichs des aufgezeichneten Bewegungsmusters und des gespeicherten Authentifizierungsmusters kann entschieden werden, ob die Authentifizierung erfolgreich ist oder nicht. Der Bewegungssensor, der beispielsweise als dreidimensionaler Beschleunigungssensor ausgeführt ist, weist üblicherweise geringe Abmessungen auf. Dementsprechend kann der vom Benutzer zu bewegende Teil der Authentifizierungseinrichtung, in dem der Bewegungssensor untergebracht ist, klein gehalten werden. Folglich lässt sich eine Authentifizierungseinrichtung mit geringem Aufwand bereitstellen. Zudem kann eine solche Authentifizierungseinrichtung auch leicht bedient werden und benötigt keine zusätzlichen Eingabevorrichtungen, wie beispielsweise eine Tastatur.

In einer Ausführungsform ist die Auswerteeinheit eingerichtet, auf der Basis des Bewegungssignals jeweilige diskrete Bewegungswerte zu bestimmen und die Bewegungswerte in einem Bewegungsvektor zu speichern. Die Auswerteeinheit ist ferner eingerichtet, die Anzeigeeinheit anzusteuern, um nach jeder Bestimmung eines jeweiligen Bewegungswerts eine diesem Bewegungswert zugeordnete Anzeige zu erzeugen. Schließlich ist die Auswerteeinheit eingerichtet, ein Authentifizierungssignal auf der Basis eines Vergleichs des Bewegungsvektors mit einem vorgegebenen Authentifizierungsvektor auszugeben.

Beispielsweise wird eine kontinuierlich von Benutzer ausgeübte Bewegung, welche in dem Bewegungssignal des Bewegungssensors resultiert, in diskrete, insbesondere zeitdiskrete Werte umgesetzt, welche einen über einen gewissen Zeitraum ausgeführten Bewegungsvorgang kennzeichnen. Die entsprechenden resultierenden Bewegungswerte werden dem Benutzer über die Anzeigeeinheit signalisiert, um ihm eine Rückmeldung zu geben, wie seine Bewegung von der Authentifizierungseinrichtung aufgenommen wurde. Dies ermöglicht den Benutzer zu erkennen, ob eine ausgeführte Bewegung beispielsweise ausreichend ist, um in der Auswerteeinheit einen gewünschten Bewegungswert zu erzeugen. Ferner kann der Benutzer so erkennen, zu welchem Bewegungswert seine Bewegung in qualitativer Hinsicht geführt hat. Der Benutzer erhält jedoch vorzugsweise keine Information darüber, ob der detektierte Bewegungswert mit einem gewünschten Bewegungswert im Authentifizierungsvektor im Einzelnen übereinstimmt oder nicht. Lediglich am Ende eines ausgeführten Bewegungsmusters wird von der Auswerteeinheit mittels des Authentifizierungssignals signalisiert, ob das komplette aufgezeichnete Bewegungsmuster beziehungsweise der Bewegungsvektor mit dem Authentifizierungsvektor ausreichend, insbesondere vollständig übereinstimmt.

Je nach Beschaffenheit des Bewegungssensors kann das Bewegungssignal verschiedene Informationen über die ausgeführte Bewegung umfassen. Das Bewegungssignal kann hierbei ein analoges Signal mit einem oder mehreren Kanälen oder auch ein digitales Signal sein und jeweils eine oder mehrere Informationen tragen. Beispielsweise ist das Bewegungssignal durch eine relative Bewegung des Bewegungssensors gekennzeichnet, etwa durch die Angabe einer X-, Y- und/oder Z-Verschiebung im dreidimensionalen Raum. Weiterhin ist es möglich, dass der Bewegungssensor intern eine Auswertung der Bewegung durchführt und absolute Positionen des Bewegungssensors speichert. Dementsprechend kann das Bewegungssignal auch durch eine solche absolute Position mit entsprechenden X-, Y- und Z-Koordinaten im dreidimensionalen Raum gekennzeichnet sein. Weiterhin kann das Bewegungssignal auch durch eine Neigung des Bewegungssensors um die drei Raumachsen gekennzeichnet sein. Insbesondere wenn der Bewegungssensor ein Beschleunigungssensor ist oder einen solchen umfasst, kann das Bewegungssignal auch durch eine Beschleunigung des Bewegungssensors entlang der drei Raumachsen im dreidimensionalen Raum gekennzeichnet sein.

Wie zuvor beschrieben, wird das Bewegungssignal des Bewegungssensors von der Auswerteeinheit in einen entsprechenden diskreten Bewegungswert umgesetzt. Je nach Ausgestaltung der Authentifizierungseinrichtung kann der resultierende Bewegungswert wenigstens durch eines der folgenden gekennzeichnet sein: Eine relative Bewegung in einer N x M-Matrix, eine Relativbewegung in einem N x M x 0-Gitter, eine Koordinate in einer N x M-Matrix, eine Koordinate in einem N x M x 0-Gitter, eine Bewegungspause, einen Zustand eines Parameters, eine Zustandsänderung eines Parameters. Beispielsweise kann sozusagen ein Punkt in einer Matrix oder in einem Gitter durch die entsprechenden Bewegungen des Bewegungssensors bewegt werden, um eine entsprechend vorgegebene Bewegung gemäß dem Authentifizierungsvektor nachzubilden. Die entsprechenden Bewegungen können gleichermaßen als Absolutwerte oder als relative Werte, entsprechend einer Bewegungsrichtung, dargestellt werden. Um eine durch den Authentifizierungsvektor vorgegebene Bewegung nachzufahren, wird dabei vorzugsweise von einer vorgegebenen oder festen Anfangsposition ausgegangen. Die jeweils durch eine Bewegung erreichte Position in einem Gitter beziehungsweise einer Matrix lässt sich unabhängig davon, ob der Bewegungswert als relativer oder absoluter Wert gespeichert ist, in einfacher Weise über die Anzeigeeinheit visualisieren.

Beispielsweise ist das Bewegungssignal wenigstens durch einen Neigungswinkel des Bewegungssensors gekennzeichnet. Dabei ist die Auswerteeinheit eingerichtet, einen Bewegungswert auf der Basis des Neigungswinkels zu bestimmen, wenn der Neigungswinkel in einem vorgegebenen Neigungsbereich für einen vorgegebenen Zeitraum gehalten ist.

In verschiedenen Ausführungsformen ist die Auswerteeinheit eingerichtet, einen jeweiligen Bewegungswert auf der Basis des Bewegungssignals und eines zuvor bestimmten Bewegungswerts oder auf der Basis des Bewegungssignals und eines Anfangswerts zu bestimmen.

Beispielsweise weist die Anzeigeeinheit eine Vielzahl von Anzeigebereichen auf, wobei jedem Bewegungswert einer, insbesondere genau einer dieser Anzeigebereiche zugeordnet ist. Insbesondere wenn die Anzeigeeinheit beziehungsweise die Anzeigebereiche eine matrixförmige oder gitterförmige Gestalt aufweisen, kann ein Bewegungswert als entsprechende Position in dieser Matrix oder diesem Gitter dargestellt werden. Weiterhin ist es möglich, dass über die Anzeigeeinheit lediglich Relativbewegungen beziehungsweise entsprechende Bewegungswerte, die Relativbewegungen kennzeichnen, dargestellt werden, beispielsweise mit Pfeildarstellungen.

Beispielsweise können die einzelnen Anzeigebereiche individuell gekennzeichnet sein, etwa mit unterschiedlichen Zahlen und/oder Symbolen. Die Kennzeichnung kann fest oder variabel gestaltet sein. Bei einer variablen Kennzeichnung ist beispielsweise durch den Authentifizierungsvektor eine bestimmte Reihenfolge vorgegeben, anhand welcher bestimmte Positionen in der Anzeigeeinheit bzw. den Anzeigebereichen nachgefahren werden sollen. Die einzelnen Bewegungen, um diese Positionen nachzufahren, können daher bei verschiedenen Authentifizierungsvorgängen trotz gleichem Authentifizierungsvektor unterschiedlich sein, führen aber zu den gleichen Bewegungswerten im Bewegungsvektor. Dadurch kann erreicht werden, dass nicht ohne Weiteres von der Beobachtung eines Bewegungsablaufs auf den zu Grunde liegenden Authentifizierungsvektor geschlossen werden kann. Damit ist die Sicherheit des Systems erhöht.

Die Anzeigenbereiche können beispielsweise durch jeweilige Leuchtmittel wie Glühlampen oder insbesondere Leuchtdioden realisiert sein, welche sich insbesondere zur Darstellung beziehungsweise Kennzeichnung einer Position in einer Matrix beziehungsweise einem Gitter eignen. Weiterhin ist es möglich, dass die Anzeigenbereiche durch Pixelgruppen auf einem Display gebildet sind. Beispielsweise ist die Authentifizierungseinrichtung von einem mobilen Kommunikationsgerät oder einer mobilen Recheneinheit umfasst, welche ohnehin ein Display aufweist, welches während eines Authentifizierungsvorgangs zur Anzeige der Bewegungswerte verwendet wird. Jedoch kann für die Authentifizierungseinrichtung auch ein gesondertes Display zur Verfügung gestellt sein. Bei der Ausbildung der Anzeigenbereiche durch Pixelgruppen auf einem Display können beispielsweise in einfacher Weise unterschiedliche, variable Kennzeichnungen für die Anzeigebereiche, wie zuvor beschrieben, realisiert werden.

Wie zuvor beschrieben, kann ein Bewegungswert auch einen Zustand eines Parameters oder eine Zustandsänderung eines solchen Parameters kennzeichnen. Ein solcher Zustand kann intern als reiner Zahlenwert dargestellt sein, um entsprechende Bewegungsvektor gespeichert zu werden. Für eine Visualisierung über die Anzeigeeinheit kann dieser Zustand jedoch auch entsprechend optisch umgesetzt sein. Beispielsweise lässt sich dieser Zustand durch eine Helligkeit oder eine Farbe darstellen, sodass bei einer bestimmten ausgeführten Bewegung des Bewegungssensors eine Helligkeitsänderung oder eine Farbänderung in dem jeweiligen Anzeigebereich dargestellt wird. Dementsprechend kann in verschiedenen Ausführungsformen wenigstens einer der Anzeigebereiche der Anzeigeeinheit mehr als zwei unterschiedliche Anzeigezustände annehmen. Durch die ersten zwei möglichen Anzeigezustände wird beispielsweise eine aktive beziehungsweise inaktive Positionierung gekennzeichnet. Beispielsweise ist in dem einen Anzeigezustand ein Leuchtmittel ausgeschaltet, während es in dem anderen Anzeigezustand eingeschaltet ist.

Wenn als Bewegungswert beispielsweise eine Bewegungspause bestimmt beziehungsweise detektiert wird, kann diese über die Anzeigeeinheit beispielsweise als Blinken oder dergleichen angezeigt werden.

Ein Zustandswechsel eines Parameters kann beispielsweise durch eine Bewegung des Bewegungssensors in einer sonst nicht definierten Bewegungsrichtung ausgelöst werden. Beispielsweise bei einer vorgestellten Bewegung in einer zweidimensionalen Matrix kann durch eine Bewegung in der dritten Dimension eine Zustandsänderung des Parameters gekennzeichnet werden. Weiterhin kann eine Zustandsänderung eines Parameters auch durch eine stärkere beziehungsweise schnellere Bewegung in eine Richtung ausgelöst werden.

In verschiedenen Ausführungsformen weist der Authentifizierungsvektor eine festgelegte Anzahl von Bewegungswerten auf. Hierbei ist die Auswerteeinheit eingerichtet, ein positives Authentifizierungssignal zu erzeugen, wenn eine Anzahl in dem Bewegungsvektor gespeicherter Bewegungswerte mit der festgelegten Anzahl übereinstimmt und zudem der Bewegungsvektor mit dem Authentifizierungsvektor inhaltlich übereinstimmt. Andernfalls wird von der Auswerteeinheit ein negatives Authentifizierungssignal erzeugt. Dementsprechend ist es vorzugsweise erforderlich, dass der Benutzer am Ende eines vorgegebenen Bewegungsmusters beispielsweise die Bewegung des Bewegungssensors einstellt, um ein Ende des Authentifizierungsvorgangs zu signalisieren. Dementsprechend ist es erforderlich, dass nicht nur durch eine entsprechende Bewegung bestimmte Bewegungswerte im Bewegungsvektor erzeugt werden, sondern dass auch die richtige Anzahl von Bewegungswerten für den sich authentifizierenden Benutzer bekannt sind.

Der Authentifizierungsvektor ist beispielsweise vorab in der Authentifizierungseinrichtung gespeichert. Alternativ ist es jedoch auch möglich, dass der Authentifizierungsvektor auf einem Speichermedium, einem Token oder dergleichen abgelegt ist, welches vor dem Authentifizierungsvorgang von der Authentifizierungseinrichtung ausgelesen wird. Der Authentifizierungsvektor kann auch aus einem dynamischen Teil und einem festen Teil zusammengesetzt sein. Beispielsweise weist der Authentifizierungsvektor eine bestimmte Anzahl von fest definierten Bewegungswerten auf und einen oder mehrere dynamisch generierte Bewegungswerte, welche beispielsweise von einem Datum oder einem Wochentag oder einer Standortinformation oder dergleichen abhängen. Ein dynamisch generierter Bewegungswert im Authentifizierungsvektor ist vorzugsweise der erste und/oder der letzte Bewegungswert im Authentifizierungsvektor.

Beispielsweise weist die Authentifizierungseinrichtung einen Zeitgeber, etwa eine interne Uhr, sowie Mittel zum Bestimmen einer Standortinformation auf, etwa mittels GPS oder anhand einer IP-Adresse.

In verschiedenen Ausführungsformen können auch mehrere Authentifizierungsvektoren für die Authentifizierung verwendet werden. Beispielsweise sind für mehrere verschiedene Benutzer unterschiedliche Bewegungsvektoren gespeichert, sodass nach Aufzeichnen des Bewegungsvektors ein Vergleich des aufgezeichneten Bewegungsvektors mit jedem der gespeicherten Authentifizierungsvektoren erfolgt und so die unabhängige Authentifizierung mehrerer Benutzer möglich ist. Das Authentifizierungssignal kann in diesem Fall auch die Information über den jeweils authentifizierten Benutzer umfassen.

Das Authentifizierungssignal beziehungsweise das entsprechende Authentifizierungsergebnis kann am Ende des Authentifizierungsvorgangs auch an den Benutzer signalisiert werden, beispielsweise mit einer Rückmeldeeinheit, welche ein akustisches, haptisches, visuelles oder mechanisches Rückmeldesignal an den Benutzer ausgibt. Beispielsweise ist in verschiedenen Ausführungsformen die Anzeigeeinheit eingerichtet, eine positive oder eine negative Authentifizierung auf der Basis des Authentifizierungssignals anzuzeigen. Dazu weist die Anzeigeeinheit vorzugsweise einen zusätzlichen Anzeigebereich auf. Weiterhin kann die Authentifizierung auch über die bereits vorhandenen Anzeigebereiche signalisiert werden.

In verschiedenen Ausführungsformen ist die Auswerteeinheit eingerichtet, das Authentifizierungssignal mit einem Authentifizierungsergebnis und wenigstens einem der folgenden zu erzeugen: Einem Zeitstempel, einer Standortinformation, einer Signatur, insbesondere einer digitalen Signatur, einer Verschlüsselung. Insbesondere wenn die Authentifizierungseinrichtung ein externes Modul ist, welches lediglich das Authentifizierungsergebnis an eine andere Einheit liefert, kann es aus Sicherheitsgründen wünschenswert sein, mehr als nur ein positives oder negatives Authentifizierungsergebnis zu übermitteln. Durch den Zeitstempel kann insbesondere verhindert werden, dass ein übertragenes Authentifizierungssignal aufgezeichnet und zu einem späteren Zeitpunkt an die andere Einheit übermittelt wird, um eine positive Authentifizierung vorzutäuschen. Weiterhin kann das Authentifizierungsergebnis, beispielsweise zusammen mit einem Zeitstempel und/oder einer Standortinformation mit einem kryptografischen Verfahren digital signiert und/oder verschlüsselt werden, um zusätzlich zu verhindern, dass das Authentifizierungssignal aufgezeichnet und in unberechtigter Weise zu einem späteren Zeitpunkt für eine Authentifizierung verwendet wird.

Die Authentifizierungseinrichtung weist zum Ausgeben des Authentifizierungssignals beispielsweise eine elektrische, insbesondere digitale Schnittstelle, beispielsweise RS232, USB oder dergleichen auf.

In verschiedenen Ausführungsformen ist die Auswerteeinheit zudem eingerichtet, den Bewegungsvektor zurückzusetzen, wenn ein vorbestimmter Bewegungswert bestimmt wird. Beispielsweise wird damit einem Benutzer ermöglicht, bei einer ungewollten Falscheingabe den Authentifizierungsvorgang von Neuem zu beginnen. Beispielsweise ist dazu ein bestimmter Bewegungsvorgang definiert, welcher zu einem bestimmten Bewegungswert führt. Beispielsweise ist festgelegt, dass der Bewegungssensor um eine Raumachse 180° in einer Richtung und anschließend 180° zurück gedreht wird, um das Rücksetzen auszulösen. Insbesondere kann jedoch jeder Bewegungsablauf gewählt werden, welcher sich von den im Authentifizierungsvektor gespeicherten Bewegungswerten unterscheidet.

In verschiedenen Ausführungsformen kann die Authentifizierungseinrichtung eingerichtet sein, bei einer oder mehrerer aufeinanderfolgender Falscheingaben weitere Eingaben zu sperren. Weiterhin ist es möglich, dass in gewissem Rahmen ein kontinuierlicher Bewegungsablauf gefordert ist, sodass bei längerer Nichteingabe oder zu langsamer Eingabe eine Zeitüberschreitung beziehungsweise ein Timeout signalisiert werden, insbesondere in Form eines negativen Authentifizierungsergebnisses. Ein negatives Authentifizierungsergebnis kann auch dann signalisiert werden, wenn eine zu große Anzahl an Bewegungswerten erzeugt wird, beispielsweise dass ein Abbruch erfolgt, wenn zwölf Bewegungswerte bestimmt wurden und die Authentifizierungsvektor lediglich acht Bewegungswerte umfasst. Diese Zahlen sind lediglich beispielhaft gewählt. Es ist jedoch wünschenswert, eine entsprechende Zahl von Bewegungswerten als Abbruchkriterium zu wählen, die größer als die Anzahl der Bewegungswerte im Authentifizierungsvektor ist, um keinen Rückschluss auf diese Anzahl zu geben. Die Anzahl als Abbruchkriterium kann auch für jeden Authentifizierungsvorgang zufällig und variabel gewählt werden.

In verschiedenen Ausführungsformen ist es auch möglich, dass der Authentifizierungsvektor geändert beziehungsweise durch einen Benutzer eingegeben werden kann, um für spätere Authentifizierungen zur Verfügung zu stehen. Weiterhin ist es möglich, dass die Authentifizierungseinrichtung einen Authentifizierungsvektor sperrt, also keine weiteren Authentifizierungsvorgänge mehr zulässt, wenn mehrere erfolglose Versuche der Authentifizierung für diesen Authentifizierungsvektor durchgeführt wurden. Weiterhin ist es möglich, dass ein spezieller Authentifizierungsvektor, sozusagen als Mastervektor zur Verfügung gestellt wird, mit dem neue Authentifizierungsvektoren zur Benutzerauthentifizierung angelegt werden können beziehungsweise gesperrte Authentifizierungsvektoren wieder entsperrt werden können. Sozusagen für Notfälle kann auch ein Rettungsvektor vorgesehen werden, der beispielsweise eine größere Länge aufweist, mit dem wiederum der Mastervektor entsperrt werden kann oder rückgesetzt werden kann, falls das Bewegungsmuster des Mastervektors verlorengegangen ist.

Eine Ausführungsform eines entsprechenden Authentifizierungsverfahrens umfasst das Detektieren einer Bewegung im dreidimensionalen Raum, um ein Bewegungssignal zu erzeugen. Auf der Basis des Bewegungssignals werden jeweilige diskrete Bewegungswerte bestimmt und in einem Bewegungsvektor gespeichert. Es wird nach jeder Bestimmung eines jeweiligen Bewegungswerts eine diesem Bewegungswert zugeordnete Anzeige erzeugt. Auf der Basis eines Vergleichs des Bewegungsvektors mit einem vorgegebenen Authentifizierungsvektor wird ein Authentifizierungssignal ausgegeben.

Beispielsweise ist das Bewegungssignal wenigstens durch einen Neigungswinkel eines Bewegungssensors gekennzeichnet, wobei die jeweiligen diskreten Bewegungswerte auf der Basis des Neigungswinkels dann bestimmt werden, wenn der Neigungswinkel in einem vorgegebenen Neigungsbereich für einen vorgegebenen Zeitraum gehalten ist.

Verschiedene weitere Ausgestaltungsformen des Verfahrens ergeben sich unmittelbar aus den zuvor beschriebenen Ausführungsformen der Authentifizierungseinrichtung.

Die Erfindung wird nachfolgend an mehreren Ausführungsbeispielen anhand von Figuren näher erläutert. Gleiche Bezugszeichen kennzeichnen hierbei Elemente oder Bauteile gleicher Funktion. Soweit sich Schaltungsteile oder Bauelemente in ihrer Funktion entsprechen, wird deren Beschreibung nicht in jeder der folgenden Figuren wiederholt.

Es zeigen:
- Figur 1: ein Blockschaltbild einer Ausführungsform einer Authentifizierungseinrichtung,
- Figur 2: eine weitere Ausführungsform einer Authentifizierungseinrichtung,
- Figur 3: einen beispielhaften Bewegungsablauf mit einem Bewegungsvektor,
- Figur 4: einen beispielhaften Bewegungsablauf in einem dreidimensionalen Gitter, und
- Figur 5: eine Ausführungsform einer Anzeigeeinheit.

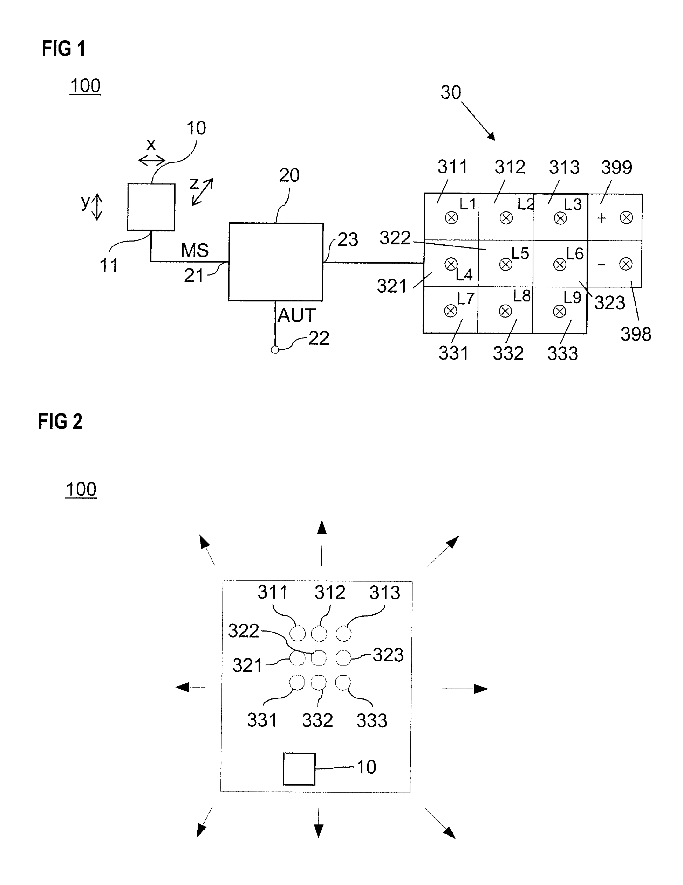

Figur 1 zeigt ein Blockschaltbild einer Ausführungsform einer Authentifizierungseinrichtung 100. Die Authentifizierungseinrichtung 100 umfasst einen Bewegungssensor 10, welcher eingerichtet ist, Bewegungen im dreidimensionalen Raum entlang der drei Raumachsen X, Y, Z aufzuzeichnen. Eine Auswerteeinheit 20 ist eingangsseitig an einem Anschluss 21 mit einem Ausgang 11 des Bewegungssensors 10 gekoppelt, um ein Bewegungssignal MS zu erhalten. Die Authentifizierungseinrichtung 100 umfasst ferner eine Anzeigeeinheit 30 mit einer Vielzahl von Anzeigenbereichen 311, 312, ..., 333, in denen jeweils Leuchtmittel L1, L2, ..., L9 angeordnet sind. Die Anordnung erfolgt beispielsweise in numerischer Reihenfolge von links oben nach rechts unten, vergleichbar zu dem Ziffernblock einer Telefontastatur. Die Anzeigeeinheit 30 umfasst ferner zwei Anzeigen 398, 399, welche wiederum jeweils ein Leuchtmittel umfassen. Die Anzeigeeinheit 30 ist an einen Ausgang 23 der Auswerteeinheit 20 angeschlossen. Ein weiterer Ausgang 22 der Auswerteeinheit 20 dient zur Abgabe eines Authentifizierungssignals AUT.

Die Auswerteeinheit 20 erhält von dem Bewegungssensor 10 das Bewegungssignal MS, welches beispielsweise Informationen über eine relative Bewegung des Bewegungssensors, eine absolute Position des Bewegungssensors, eine Neigung des Bewegungssensors, eine Beschleunigung des Bewegungssensors, jeweils im dreidimensionalen Raum, oder eine Kombination der zuvor genannten Informationen enthält. Beispielsweise wird das Bewegungssignal durch eine Bewegung des Bewegungssensors 10 beziehungsweise der Authentifizierungseinrichtung 100 durch einen Benutzer erzeugt. In der Auswerteeinheit 20 werden auf der Basis des Bewegungssignals MS jeweilige diskrete, insbesondere zeitdiskrete, Bewegungswerte bestimmt, welche in einen Bewegungsvektor abgespeichert werden. Vorzugsweise nach jeder Bestimmung eines Bewegungswerts wird eine diesem Bewegungswert entsprechende Anzeige generiert, welche über die Anzeigeeinheit 30 beziehungsweise die entsprechenden Anzeigebereiche 311, 312, ..., 333 zur Anzeige gebracht wird.

In der Auswerteeinheit 20 sind ferner einer oder mehrere Authentifizierungsvektoren gespeichert, welche eine bestimmte Folge von Bewegungswerten, entsprechend einem vorgegebenen Bewegungsmuster, umfassen. Zur Authentifizierung eines Benutzers ist es nun erforderlich, dass der Benutzer mit dem Bewegungssensor 10 ein bestimmtes Bewegungsmuster ausführt, welches dem im Authentifizierungsvektor gespeicherten Bewegungswerten entspricht beziehungsweise zu diesen führt. Wenn durch die entsprechenden Bewegungen des Benutzers die richtigen Bewegungswerte erzeugt werden und die so gespeicherten Bewegungswerte des Bewegungsvektors mit den Bewegungswerten des Authentifizierungsvektors inhaltlich übereinstimmen, kann von der Auswerteeinheit eine positive Authentifizierung bestätigt werden und als entsprechendes Authentifizierungssignal AUT am Ausgang 22 abgegeben werden. Ferner kann in verschiedenen Ausführungsformen das Authentifizierungsergebnis auch über die Anzeigebereiche 398, 399 visualisiert werden, beispielsweise durch Aktivieren des Leuchtmittels im Anzeigebereich 399 bei positiver Authentifizierung und durch Aktivieren des Leuchtmittels im Anzeigebereich 398 bei negativer Authentifizierung.

In verschiedenen Ausgestaltungsformen können die Anzeigebereiche 398, 399 auch weggelassen werden und beispielsweise durch eine andere Art der Rückmeldung ersetzt werden. Beispielsweise wird hierfür eine Rückmeldeeinheit vorgesehen, die eine akustische, haptische, visuelle oder mechanische Rückmeldung liefert.

Die Leuchtmittel L1, L2, ..., L9 der Anzeigeeinheit 30 sind beispielsweise als einfarbige oder mehrfarbige Leuchtdioden ausgeführt. In dieser Ausführungsform sind lediglich neun Anzeigebereiche vorgesehen. Jedoch können in anderen Ausführungsformen auch mehrere Anzeigebereiche vorgesehen werden, welche beispielsweise eine N x M-Matrix bilden. Die Dimensionen N, M können gleich groß sein, können aber auch verschieden groß gewählt werden. Weiterhin ist es möglich, die Anzeigeeinheit 30 für die Anzeige eines dreidimensionalen Gitters der Größe N x M x O auszugestalten.

Ferner kann jeder Anzeigebereich der Anzeigeeinheit 30 so ausgestaltet sein, dass er neben einem aktiven und einem inaktiven Zustand auch weitere Zustände annehmen kann, die beispielsweise durch unterschiedliche Farben, unterschiedliche Blinkmuster oder dergleichen gebildet sind.

Bei einer Authentifizierung ist es demnach beispielsweise für einen Benutzer erforderlich, durch entsprechende Bewegungen eine Anzeige von entsprechenden Zuständen in den Anzeigebereichen der Anzeigeeinheit 30 zu erzeugen, insbesondere eine Bewegung und/oder Zustandsänderung zwischen den einzelnen Anzeigebereichen, welche den vorgegebenen Authentifizierungsvektor repräsentieren.

Figur 2 zeigt beispielsweise symbolisch eine Authentifizierungseinrichtung 100 mit dem Bewegungssensor 10 und den Anzeigebereichen 311, 312, ..., 333 und möglichen gewünschten Bewegungen beziehungsweise Bewegungsrichtungen, die von der Auswerteeinheit 20 in entsprechende Bewegungswerte umgesetzt werden können. Beispielsweise sind bei der in Figur 2 dargestellten Ausführungsform acht Bewegungen beziehungsweise Bewegungsrichtungen vorgesehen, nämlich oben, rechts oben, rechts, rechts unten, unten, links unten, links, links oben. Beispielsweise wird durch solche Bewegungen ein aktivierter Anzeigebereich, im Folgenden Punkt genannt, entsprechend dieser Bewegung bewegt. Dies soll an einigen Beispielen erläutert werden. Ausgehend von beispielsweise einer Position im Zentrum der Anzeigeeinheit, gekennzeichnet durch einen aktivierten Anzeigebereich 322, führt eine Bewegung nach oben, beziehungsweise in der Ebene gesehen nach vorne zu einer Bewegung des Punkts zum Anzeigebereich 312, sodass dieser bei entsprechend bestimmten Bewegungswert zur Anzeige aktiviert wird. Wenn aber der Benutzer eine Bewegung nach rechts unten, in der Ebene gesehen nach rechts hinten, ausführt, wird dies als Bewegung des Punktes zur Anzeigeeinheit 333 interpretiert. Eine darauffolgende Bewegung geht dann beispielsweise von diesem neuen Punkt aus, sodass beispielsweise vom Punkt rechts unten, entsprechend dem Anzeigebereich 333, sinnvolle Bewegungen, die von der Auswerteeinheit 20 ausgewertet werden und zu einem Bewegungswert führen, nach links, nach oben oder nach links oben führen. Entsprechend diesem Prinzip kann also von einem Benutzer eine bestimmte Bewegungsfolge in der Anzeigeeinheit 30 sozusagen abgefahren werden, um den gewünschten beziehungsweise gespeicherten Authentifizierungsvektor zu erhalten.

Wenn die entsprechenden Anzeigebereiche zur Anzeige mehrerer Zustände vorgesehen sind, kann eine Zustandsänderung beispielsweise durch eine Bewegung in einer zusätzlichen Bewegungsrichtung, beispielsweise senkrecht zur Anzeigefläche, bewirkt werden. Ebenso kann eine besonders schnelle Bewegung oder eine Bewegung mit hoher Beschleunigung zu einer solchen Zustandsänderung führen.

In verschiedenen Ausführungsformen können die beispielhaft acht angegebenen Bewegungsrichtungen durch tatsächliche Relativbewegungen in der Ebene der Anzeigeeinheit 30 ausgelöst werden. Alternativ ist es auch möglich, einen entsprechenden Bewegungswert zu erhalten, wenn die Authentifizierungseinrichtung 100 mit dem Bewegungssensor 10 in die entsprechende Richtung geneigt wird, sodass beispielsweise eine Neigung in einem vorgegebenen Neigungsbereich von etwa 30° bis 60°, insbesondere um 45° herum erreicht wird. Beispielsweise kann die Auswertung so gestaltet sein, dass es erforderlich ist, einen solchen Neigungswinkel für einen bestimmten Zeitraum zu halten, um die Detektion des entsprechenden Bewegungswerts tatsächlich auszulösen. Der Benutzer erhält hierbei üblicherweise die Rückmeldung über die ausgeführte Bewegung durch eine entsprechende Änderung in der Anzeigeeinheit 30.

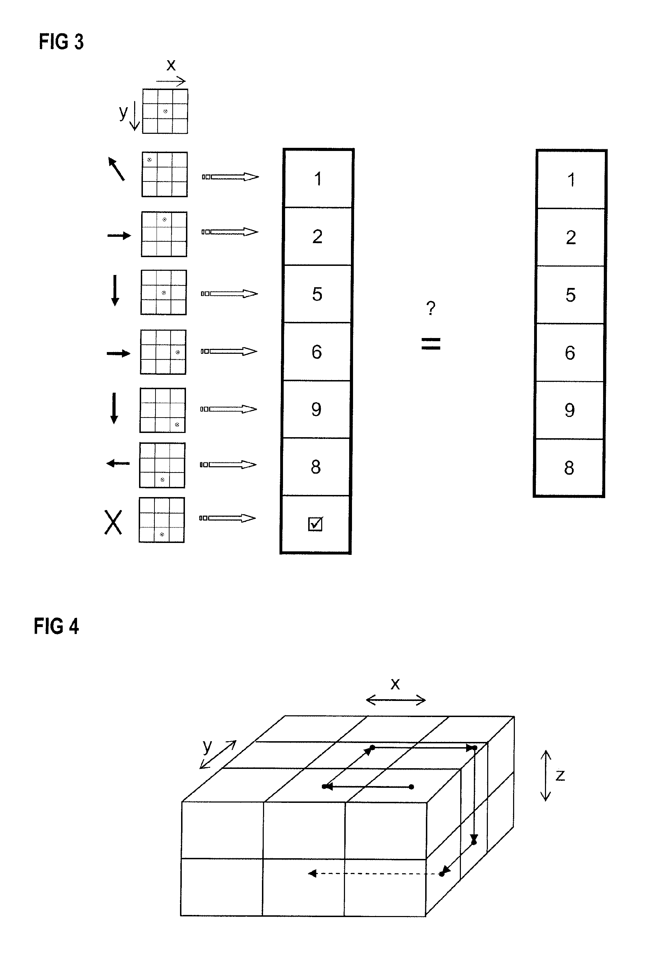

Figur 3 zeigt ein Ausführungsbeispiel für einen möglichen Bewegungsablauf, welcher ausgewertet wird, um das Auswerteergebnis anschließend mit einem gespeicherten Authentifizierungsvektor zu vergleichen. Dazu ist beispielsweise auf der linken Seite der Abbildung in Figur 3 jeweils ein 3x3-matrixförmiger Anzeigebereich mit X- und Y-Richtung dargestellt, der sich von oben nach unten über die Zeit durch entsprechende Bewegungen verändert.

Ausgehend von einem Punkt in der Mitte der Anzeige beziehungsweise der Matrix werden verschiedene Bewegungen ausgeführt, welche zu einer Positionsänderung innerhalb der Matrix führen, wobei jeder Position ein bestimmter Zahlenwert zugeordnet ist. Hier ist beispielsweise eine numerische Zuordnung von links oben nach rechts unten vorgesehen, analog zu dem Ziffernblock einer Telefontastatur. Dementsprechend ist der Ausgangswert beispielsweise der Zahl 5 gleichzusetzen. Bei einer Bewegung nach links oben, beispielsweise durch entsprechende Neigung des Bewegungssensors 10 wird ausgehend von dem Ausgangspunkt ein Bewegungswert bestimmt, welcher als Anzeige links oben dargestellt wird und als Zahl 1 in den Bewegungsvektor abgespeichert wird. Eine darauffolgende Bewegung nach rechts führt zu einer Verschiebung des Punktes um eine Position nach rechts, entsprechend einem abgespeicherten Bewegungswert 2. Im Folgenden wird bei dem vorliegenden Ausführungsbeispiel ein Bewegungsmuster mit Bewegungen nach unten, nach rechts, nach unten und nach links ausgeführt, was in einer entsprechenden Bewegung des angezeigten Punktes in der Matrix führt und in entsprechenden Bewegungswerten 5, 6, 9, 8 resultiert, die in dem Bewegungsvektor abgespeichert werden. Um ein Ende des Authentifizierungsvorgangs zu signalisieren, erfolgt im letzten Schritt keine Bewegung des Bewegungssensors, gekennzeichnet durch das Kreuz, was von der Auswerteeinheit 20 als Abschluss des Authentifizierungsvorgangs interpretiert wird. Der Bewegungsvektor entsprechend der Bewegung des Benutzers liegt nun vollständig vor. In einem nächsten Schritt wird dieser gespeicherte Bewegungsvektor mit dem ganz rechts in Figur 3 dargestellten Authentifizierungsvektor verglichen. Da bei dem dargstellten Ausführungsbeispiel der aufgezeichnete Bewegungsvektor und der vorgegebene Authentifizierungsvektor sowohl in Länge als auch Inhalt übereinstimmen, kann von der Auswerteeinheit 20 eine positive Authentifizierung festgestellt werden und als entsprechendes Authentifizierungssignal AUT abgegeben werden. Wenn der Authentifizierungsvektor eine andere Länge und/oder andere Bewegungswerte aufweisen würde, würde dies zu einem negativen Authentifizierungsergebnis führen, welches wiederum als Authentifizierungssignal AUT abgegeben werden würde.

Der in Figur 3 beispielhaft dargestellte Authentifizierungsvorgang kann, wie zuvor angegeben, um weitere Authentifizierungselemente ergänzt werden. Insbesondere können bestimmte Bewegungsabläufe zu der zuvor beschriebenen Zustandsänderung führen, welche in dem Bewegungsvektor abgespeichert werden und in entsprechender Form auch im Authentifizierungsvektor vorhanden sind. Beispielweise umfasst in diesem Fall jede Zelle des Bewegungsvektors beziehungsweise des Authentifizierungsvektors mehr als eine Information. Auch die Darstellung der im Bewegungsvektor beziehungsweise Authentifizierungsvektor gespeicherten Bewegungswerte als reine Zahlen ist nur beispielhaft zu verstehen. Insbesondere können die Bewegungswerte auch durch andere Codierungen im Bewegungsvektor beziehungsweise Authentifizierungsvektor gespeichert sein. Beispielsweise sind zweidimensionale oder dreidimensionale Koordinaten direkt oder in codierter Form in dem Bewegungsvektor beziehungsweise Authentifizierungsvektor gespeichert.

Während in Figur 3 eine Bewegung im zweidimensionalen Raum beziehungsweise innerhalb einer zweidimensionalen Matrix dargestellt ist, kann in anderen Ausführungsformen auch eine Bewegung im dreidimensionalen Raum beziehungsweise in einem dreidimensionalen Gitter dargestellt werden. Beispielsweise zeigt Figur 4 ein beispielhaftes dreidimensionales Gitter mit zwei Ebenen mit jeweils 3x3-Feldern. Lediglich zur Verdeutlichung des Prinzips soll anhand der Bewegungspfeile in Figur 4 dargestellt werden, dass ein Bewegungsvektor beziehungsweise Authentifizierungsvektor auch solche Bewegungen im dreidimensionalen Gitter darstellen kann. Beispielsweise erfolgt hierbei eine Bewegung ausgehend von einem Feld in der oberen Ebene, rechts unten, nach links, anschließend nach oben, anschließend nach rechts und anschließend mit einem Wechsel in die untere Ebene. Dort erfolgt eine Bewegung nach unten, um beispielsweise weiter eine Bewegung nach links einzuleiten.

Welche Bewegungen des Bewegungssensors erforderlich sind, um die abgebildeten Bewegungen innerhalb des Gitters zu erreichen, kann unterschiedlich ausgeführt sein. Beispielsweise erfolgt eine Bewegung zwischen Zellen innerhalb einer Ebene durch seitliche Bewegung oder alternativ durch Neigung des Bewegungssensors, während ein Ebenenwechsel beispielsweise durch eine Bewegung entlang der Z-Achse des Bewegungssensors ausgelöst wird.

Weiterhin kann in verschiedenen Ausführungsformen ein bestimmtes Bewegungsmuster oder eine Bewegungsabfolge festgelegt werden, welche zu einem Bewegungswert führt, der beispielsweise ein Rücksetzen des Bewegungsvektors beziehungsweise eines Authentifizierungsvorgangs bewirkt. Beispielsweise, wenn der Benutzer anhand einer entsprechenden Darstellung in der Anzeigeeinheit 30 erkennt, dass er eine Fehleingabe gemacht hat, kann durch eine entsprechende Rücksetzbewegung ein neuer Authentifizierungsvorgang ausgelöst werden, der insbesondere nicht als Fehleingabe zählt. Beispielsweise ist nämlich nur eine bestimmte Anzahl an Fehleingaben möglich, bevor die komplette Authentifizierungseinrichtung gesperrt ist oder zumindest für einen bestimmten Benutzer oder einem bestimmten Authentifizierungsvektor gesperrt ist. Eine solche Sperrung kann zeitlich abhängig sein und nach einer bestimmten Zeit wieder aufgehoben werden. Alternativ ist es möglich, dass eine solche Sperrung durch eine Masterbewegungsfolge, die in einem Masterauthentifizierungsvektor gespeichert ist, aufgehoben werden kann.

Weiterhin ist es möglich, dass in der Authentifizierungseinrichtung 100 nicht nur ein Authentifizierungsvektor gespeichert ist, sondern mehrere verschiedene Authentifizierungsvektoren, welche für unterschiedliche Benutzer vorgesehen sind. Somit ist es beispielsweise möglich, dass neben dem reinen Authentifizierungsergebnis, nämlich erfolgreich oder nicht erfolgreich, auch die Identität des zugehörigen Benutzers mit in dem Authentifizierungssignal AUT übermittelt wird. Um die Sicherheit der Authentifizierungseinrichtung 100 zu erhöhen, kann es insbesondere bei einer als externen Vorrichtung betriebenen Authentifizierungseinrichtung 100 wünschenswert sein, das Authentifizierungssignal zusätzlich mit einem Zeitstempel und/oder einer Standortinformation zu versehen. Ferner ist es möglich, das Authentifizierungsergebnis zusammen mit den zuvor genannten weiteren möglichen Informationen mit einem kryptografischen Verfahren digital zu signieren und/oder zu verschlüsseln. Durch die genannten Maßnahmen kann beispielsweise verhindert werden, dass ein Authentifizierungssignal aufgezeichnet wird und zu einem späteren Zeitpunkt für eine angebliche positive Authentifizierung abgespielt wird.

Beispielsweise weist die Authentifizierungseinrichtung 100 einen Zeitgeber, etwa eine interne Uhr, sowie Mittel zum Bestimmen einer Standortinformation auf, etwa mittels GPS oder anhand einer IP-Adresse.

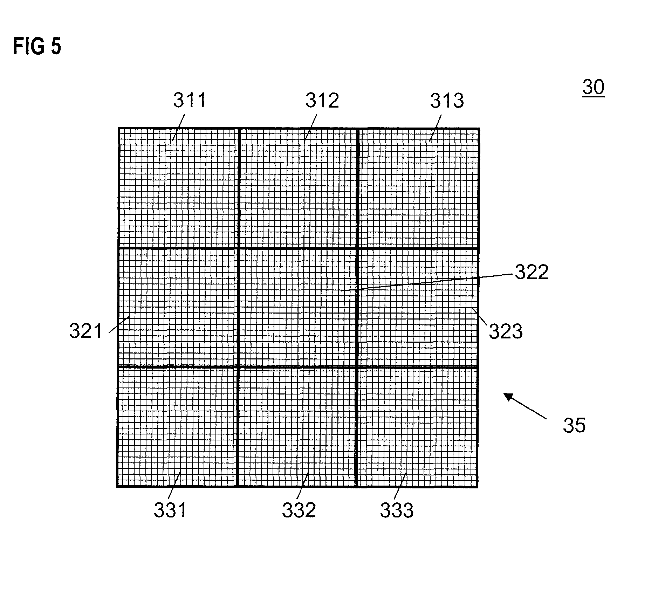

Neben der Signalisierung von Bewegungswerten in der Anzeigeeinheit 30 mittels eines Leuchtmittels ist es auch möglich, eine entsprechende Anzeige durch Pixel auf einem Display darzustellen. Beispielsweise zeigt Figur 5 eine Anzeigeeinheit 30 mit einem Display 35, welches mehrere Anzeigebereiche 311, 312, ..., 333 aufweist, welche jeweils durch eine Gruppe von Pixeln gebildet sind. Dies ermöglicht insbesondere die vereinfachte Darstellung mehrerer verschiedener Zustände, sodass ein Anzeigebereich nicht nur aktiv oder inaktiv sein kann, sondern auch durch unterschiedliche Farben, die Anzeige von verschiedenartigen Symbolen oder dergleichen angesteuert werden können. Auch die Anzeige einer positiven beziehungsweise negativen Authentifizierung am Ende eines Authentifizierungsvorgangs lässt sich über das Display 35 in einfacher Weise implementieren.

### Bezugszeichenliste

- 100: Authentifizierungseinrichtung
- 10: Bewegungssensor
- 20: Auswerteeinheit
- 30: Anzeigeeinheit
- MS: Bewegungssignal
- AUT: Authentifizierungssignal
- 311, 312, ..., 333: Anzeigebereich
- 398, 399: Anzeigebereich
- L1, L2, ..., L9: Leuchtmittel

## Patentansprüche

1. Authentifizierungseinrichtung (100) mit einem Bewegungssensor (10), der eingerichtet ist, eine Bewegung im dreidimensionalen Raum zu detektieren um ein Bewegungssignal (MS) zu erzeugen, mit einer Anzeigeeinheit (30) und mit einer Auswerteeinheit (20), die eingerichtet ist,
- auf der Basis des Bewegungssignals (MS) jeweilige diskrete Bewegungswerte zu bestimmen;
- die Bewegungswerte in einem Bewegungsvektor zu speichern;
- die Anzeigeeinheit (30) anzusteuern, um nach jeder Bestimmung eines jeweiligen Bewegungswerts eine diesem Bewegungswert zugeordnete Anzeige zu erzeugen; und
- ein Authentifizierungssignal (AUT) auf der Basis eines Vergleichs des Bewegungsvektors mit einem vorgegebenen Authentifizierungsvektor auszugeben.

2. Authentifizierungseinrichtung (100) nach Anspruch 1, bei der das Bewegungssignal (MS) wenigstens durch einen Neigungswinkel des Bewegungssensors (10) gekennzeichnet ist, wobei die Auswerteeinheit (20) eingerichtet ist, einen Bewegungswert auf der Basis des Neigungswinkels zu bestimmen, wenn der Neigungswinkel in einem vorgegebenen Neigungsbereich für einen vorgegebenen Zeitraum gehalten ist.

3. Authentifizierungseinrichtung (100) nach Anspruch 1 oder 2, bei der ein Bewegungssignal (MS) durch wenigstens eines der folgenden gekennzeichnet ist:
- eine relative Bewegung des Bewegungssensors (10);
- eine absolute Position des Bewegungssensors (10);
- eine Neigung des Bewegungssensors (10);
- eine Beschleunigung des Bewegungssensors (10);
jeweils im dreidimensionalen Raum.

4. Authentifizierungseinrichtung (100) nach einem der Ansprüche 1 bis 3, bei der ein Bewegungswert wenigstens eines der folgenden kennzeichnet:
- eine relative Bewegung in einer N x M - Matrix;
- eine relative Bewegung in einem N x M x 0 - Gitter;
- eine Koordinate in einer N x M - Matrix;
- eine Koordinate in einem N x M x 0 - Gitter;
- eine Bewegungspause;
- einen Zustand eines Parameters;
- eine Zustandsänderung eines Parameters.

5. Authentifizierungseinrichtung (100) nach einem der Ansprüche 1 bis 4, bei der die Auswerteeinheit (20) eingerichtet ist, einen jeweiligen Bewegungswert auf der Basis des Bewegungssignals (MS) und eines zuvor bestimmten Bewegungswerts oder auf der Basis des Bewegungssignals (MS) und eines Anfangswerts zu bestimmen.

6. Authentifizierungseinrichtung (100) nach einem der Ansprüche 1 bis 5, bei der die Anzeigeeinheit (30) eine Vielzahl von Anzeigebereichen (311, 312, ..., 333) aufweist, wobei jedem Bewegungswert einer, insbesondere genau einer, dieser Anzeigebereiche (311, 312, ..., 333) zugeordnet ist.

7. Authentifizierungseinrichtung (100) nach Anspruch 6, bei der die Anzeigebereiche (311, 312, ..., 333) durch Leuchtmittel (L1, L2, ..., L9), insbesondere Leuchtdioden, oder durch Pixelgruppen auf einem Display (35) gebildet sind.

8. Authentifizierungseinrichtung (100) nach Anspruch 6 oder 7, bei der wenigstens einer der Anzeigebereiche (311, 312, ..., 333) mehr als zwei unterschiedliche Anzeigezustände annehmen kann.

9. Authentifizierungseinrichtung (100) nach einem der Ansprüche 1 bis 8, bei der der Authentifizierungsvektor eine festgelegte Anzahl von Bewegungswerten aufweist, und bei der die Auswerteeinheit (20) eingerichtet ist, ein positives Authentifizierungssignal (AUT) zu erzeugen, wenn eine Anzahl in dem Bewegungsvektor gespeicherter Bewegungswerte mit der festgelegten Anzahl übereinstimmt und der Bewegungsvektor mit dem Authentifizierungsvektor inhaltlich übereinstimmt, und anderenfalls ein negatives Authentifizierungssignal (AUT) zu erzeugen.

10. Authentifizierungseinrichtung (100) nach Anspruch 9,
bei der wenigstens ein Bewegungswert des Authentifizierungsvektors dynamisch festlegbar ist.

11. Authentifizierungseinrichtung (100) nach einem der Ansprüche 1 bis 10, bei der die Auswerteeinheit (20) eingerichtet ist, das Authentifizierungssignal (AUT) mit einem Authentifizierungsergebnis und wenigstens einem der folgenden zu erzeugen:
- einem Zeitstempel;
- einer Standortinformation;
- einer Signatur, insbesondere einer digitalen Signatur;
- einer Verschlüsselung.

12. Authentifizierungseinrichtung (100) nach einem der Ansprüche 1 bis 11, bei der die Anzeigeeinheit (30) eingerichtet ist, eine positive oder eine negative Authentifizierung auf der Basis des Authentifizierungssignals (AUT) anzuzeigen.

13. Authentifizierungseinrichtung (100) nach einem der Ansprüche 1 bis 12, bei der die Auswerteeinheit (20) eingerichtet ist, den Bewegungsvektor zurückzusetzen, wenn ein vorbestimmter Bewegungswert bestimmt wird.

14. Authentifizierungsverfahren, umfassend:
- Detektieren einer Bewegung im dreidimensionalen Raum um ein Bewegungssignal (MS) zu erzeugen;
- Bestimmen von jeweiligen diskreten Bewegungswerten auf der Basis des Bewegungssignals (MS);
- Speichern der Bewegungswerte in einem Bewegungsvektor;
- Nach jeder Bestimmung eines jeweiligen Bewegungswerts Erzeugen einer diesem Bewegungswert zugeordneten Anzeige; und
- Ausgeben eines Authentifizierungssignals (AUT) auf der Basis eines Vergleichs des Bewegungsvektors mit einem vorgegebenen Authentifizierungsvektor.

15. Authentifizierungsverfahren nach Anspruch 14, bei dem das Bewegungssignal (MS) wenigstens durch einen Neigungswinkel eines Bewegungssensors (10) gekennzeichnet ist, wobei die jeweiligen diskreten Bewegungswerte auf der Basis des Neigungswinkels dann bestimmt werden, wenn der Neigungswinkel in einem vorgegebenen Neigungsbereich für einen vorgegebenen Zeitraum gehalten ist.
